# EUROPEAN PATENT APPLICATION

(11) **EP 1 818 956 A2**
(43) Date of publication of application: **15.08.2007**
(21) Application number: 06004253.8
(22) Date of filing: 02.03.2006
(51) Int. Cl.: H01G 9/052

(54) **High capacitance capacitor anode**

(30) Priority: 09.02.2006 IL 17364906
(71) Applicant: Cerel (Ceramic Technologies) Ltd., 39120 Tirat Hacarmel (IL)
(72) Inventor: Thon, Assaf, 34643 Haifa (IL)
(74) Representative: Böhm, Brigitte

(57) **Abstract**

The invention is a high capacitance capacitor anode manufactured by creating a green anode body from particles of a dielectric oxide film-forming electrical conducting non-agglomerated powder, sintering the green anode body, and anodizing the sintered body. The non-agglomerated powder comprises fine particles having a small average particle size and a narrow size distribution, which gives the green anode body a morphology that allows it to be sintered at temperatures lower than 1200°C. The invention is also a method of manufacturing these anodes.

## Description

### Field of Invention

The present invention generally relates to solid electrolytic capacitors. More particularly, the present invention relates to anodes of solid electrolytic capacitors featuring high electrical capacitance relative to their physical size. Also, the present invention relates to a manufacturing process for such solid electrolytic capacitor anodes.

### Background of the Invention

There is a continuously growing demand in the market of solid electrolytic capacitors for small case size capacitors featuring low manufacturing costs and high electrical capacitance. Miniature 'chip' solid electrolytic capacitors designed for surface mounting (SMT) applications are increasingly being used in microelectronics and communication applications.

A solid electrolytic capacitor consists of a high surface area porous sintered pellet, the anode, made from a capacitor grade powder, with an embedded conductor wire or foil and a dielectric oxide layer, which is formed by anodizing the surface of the pellet. The anodized porous body is then impregnated and coated with a cathode material and connected to a cathode lead wire. Finally the assembly is encapsulated.

Large capacitance is achieved with extremely thin dielectric layers and very high surface area of the capacitor anode. The high surface area of the porous pellet structure is the dominant feature that allows solid electrolytic capacitors to have higher capacitance per unit volume than any other type of capacitor.

Anodes of solid electrolytic capacitors are typically made from tantalum (Ta), niobium (Nb), aluminum (A1) or niobium oxide (NbO). The anode morphology significantly influences the quality and electrical properties of the capacitor.

In current industrial manufacturing processes, solid electrolytic capacitors are made from large particle agglomerates and therefore can only partially comply with demands for miniaturization and high electrical capacitance in small package size.

In one production method known from the art, the powder is first mixed with specific adhesive binders and then pressed to form a porous 'slug' named also 'green anode' having a density much lower than the bulk density of the anode material.

The next production step is to sinter the green anode into a porous rigid pellet with high open porosity and high mechanical strength that acts as the capacitor anode. Sintering is done in vacuum or in a protective environment at about 1300°C to 1500°C. This relatively high temperature is required in order to produce capacitors with sufficient mechanical strength. If lower temperatures are used the anode crumbles due to the large size of the powder agglomerates.

After sintering, a dielectric oxide layer is formed by anodizing of the entire interconnected open porosity surface of the anode.

Next a cathode is formed on the surface of the dielectric by impregnation of a cathode material, such as manganese oxide (MnO₂), or a conductive polymer.

The effective efficiency of a specific capacitor powder is indicated by a single lumped parameter, the CV of the powder, which is the product of the capacitance that can be carried by the powder and the dielectric formation voltage per unit powder weight. CV has the physical units of Farads multiplied by volts divided by grams. Different powders are compared by measuring the capacitance of the sintered anode after formation and calculating from it the CV value of the powder. By definition, since the capacitance is inversely proportional to the formation voltage, CV is indifferent to the formation voltage and can be used as a measure of the powder properties regardless of specific formation conditions.

To accommodate current production methods, industry uses highly porous powders with large agglomerates and wide distribution of particle sizes in order to facilitate handling of the powders.

For example, capacitor grade tantalum powder and a method for making capacitor anode are described in US Patent No. 5,986,877 and US Patent No. 5,954,856. US Patent No. 6,765,786 discloses a niobium powder for producing niobium capacitors. US Patents No. 6,527,937 B2 and US Patent Application No. 2003/0170169 A1 describe a method for producing capacitor grade niobium monoxide powder.

Tantalum, Niobium and Niobium oxide powders with rated CV ranging from 10,000 µF-V/g to 120,000 µF-V/g (also referred to as 10 KCV to 120 KCV) are standard and commercially available from various manufacturers. Higher CV powders made from high surface area particle agglomerates are being developed.

Recently, ElectroPhoretic (EPD) method has been offered as a means to manufacture solid electrolytic capacitor anodes from non-agglomerated, non-granulated capacitor grade powder made from fine particles of materials such as, but not limited to, tantalum, aluminum, niobium, or niobium monoxide.

EPD processes, capacitor anodes made by EPD, and capacitors made thereof have been described in the art. A few examples are PCT application IL/2002/00458, PCT application IL/2004/000865, and Israeli patent application No. 168397 dated May 4, 2005 all by the applicant of the present application, the descriptions of which, including references cited therein, are incorporated herein by reference in their entirety.

As described in the art, use of small particle size powders with narrow and sharp particle size distribution would be advantageous for making small size capacitors with high capacitance density and tight tolerance of electrical properties.

It is, therefore, an object of the present invention to obtain capacitor anodes having high capacitance that are produced at low sintering temperature.

It is another object of the current invention to provide a manufacturing process using low sintering temperature to produce solid electrolyte capacitor anodes and capacitors having high electrical capacitance in a small package size.

Other objects and advantages of the invention will become apparent as the description proceeds.

### Summary of the Invention

In one aspect, the present invention is a high capacitance capacitor anode that is manufactured by creating a green anode body from particles of a dielectric oxide film-forming electrical conducting non-agglomerated powder, sintering the green anode body, and anodizing the sintered body. The non-agglomerated powder comprises fine particles having a small average particle size and a narrow size distribution. The selection of particle size results in an anode having a morphology comprised of a multitude of solid particles of powder substantially uniformly dispersed throughout its volume with voids interspersed between the particles forming a network of interconnecting channels. This morphology allows the green anode body to be sintered at temperatures significantly lower than that recommended by the manufacturer of the powder. The sintering temperature is lower than 1200°C and, in some embodiments, at a temperature in the range from 900°C to 1000°C. After anodizing, the measured CV of the anodized, sintered anode of the invention is significantly higher than the CV determined for the powder by the manufacturer.

The powder is preferably made from particles of one of the materials selected from the following group: tantalum, aluminum, magnesium, titanium, niobium, zinc, zirconium, and niobium monoxide. In preferred embodiments of the invention the non-agglomerated powder particle size is characterized by D₁₀ in the range from 0.2 micron to 2 microns, D₅₀ in the range from 0.5 micron to 5 microns and D₉₀ in the range from 1.2 microns to 12 microns. In more preferred embodiments the non-agglomerated powder particle size is characterized by D₁₀ in the range from 0.4 micron to 0.8 micron, D₅₀ in the range from 0.8 micron to 3 microns and D₉₀ in the range from 1.5 microns to 6 microns. In order to obtain the preferred particle distributions, the powder may be treated before being formed into a green anode body such that the fine particles have the desired small maximum particle size and narrow size distribution.

In preferred embodiments of the invention, the green anode body is formed by depositing the fine particles from a suspension by an EPD process.

In another aspect, the invention is a method of producing the high capacitance capacitor anodes. The method comprises the steps of:
a. selecting a capacitor grade powder;
b. treating the powder to produce non-agglomerated powder comprising fine particles having a small maximum particle size and a narrow size distribution;
c. preparing a green anode;
d. sintering the green anode; and
e. oxidizing the entire inner and outer surface of the sintered anode.

In preferred embodiments of the method of the invention, the green anode body is formed by depositing fine particles from a suspension by an EPD process. In these embodiments the method may comprise the additional step, between step a and step b, of preparing a stable suspension of the capacitor grade powder that is suitable for the EPD deposition process and treating the stable suspension by sedimentation and decantation, thereby reducing agglomerate size and narrowing the size distribution of the dispersed particles in the EPD suspension. Alternatively a milling technique can be used to achieve the required particle size distribution. In preferred embodiments of the method the sintering temperature is between 900°C and 1000°C.

The powder used to carry out the method of the invention is preferably made from particles of one of the materials selected from the following group: tantalum, aluminum, magnesium, titanium, niobium, zinc, zirconium, and niobium monoxide. The non-agglomerated powder particle size is preferably characterized by D₁₀ ranging from 0.2 micron to 2 microns, D₅₀ ranging from 0.5 micron to 5 microns and D₉₀ ranging from 1.2 microns to 12 microns. More preferably the non-agglomerated powder particle size is characterized by D₁₀ ranging from 0.4 micron to 0.8 micron, D₅₀ ranging from 0.8 micron to 3 microns and D₉₀ ranging from 1.5 microns to 6 microns.

In another aspect the invention is a solid electrolyte capacitor comprising a high capacitance capacitor anode of the invention or comprising a high capacitance capacitor anode produced according to the method of the invention.

### Brief Description of the Drawings

- Fig. 1 shows the particle size distribution of capacitor grade 80,000 CV NbO powder as received from the manufacturer and after being adapted to EPD;
- Fig. 2 is a photograph of a green NbO anode made by EPD on Ta wire;
- Fig. 3 is a cross section photograph of the anode of Fig. 2 showing the fine morphological structure of anodes made by EPD;
- Fig. 4 is a cross section SEM of a typical prior art pressed anode showing typical defects in the anode morphology;
- Fig 5 shows CV values of anodes made from various powders and at several dielectric formation voltages, as a function of the sintering temperature;
- Fig 6 shows the dependence of direct current leakage (DCL) on sintering temperature; and
- Fig. 7 shows an unencapsulated capacitor made from an anode produced by the method of the invention.

### Detailed Description of the Preferred Embodiments

Capacitor anodes made by EPD from non-agglomerated powders are characterized by fine morphology and open porosity. The basis of the present invention is the confirmation by the inventors of the observation that by reducing the maximum agglomerate size and narrowing the size distribution of the commercially supplied particles used in the EPD suspension, significantly lower sintering temperature can be used then if the suspension comprises particles of the size distribution provided by the manufacturer. It has been found that the anodes obtained according to the method of this invention demonstrate robustness, high surface area, and CV values which are much higher than the CV of the powder as rated by the supplier. In addition to providing capacitors having much higher capacitance per unit volume than prior art solid electrolytic capacitors, the lower sintering temperatures used in the present invention provide a significant economic advantage to the method of the invention.

The anode production in the present invention includes the steps of:
a. selection of capacitor grade powder for the production of a solid electrolytic capacitor anode;
b. treatment of the powder to reduce agglomerate size and narrow the size distribution of the particles;
c. preparing a stable suspension suitable for EPD deposition process;
d. deposition by EPD of a green anode;
e. sintering the green anode; and
f. oxidizing the entire inner and outer surface of the sintered anode.

In a preferred embodiment of the invention, steps b and c are interchanged and, after the stable EPD suspension is prepared, it is treated by sedimentation and decantation, thereby reducing agglomerate size and narrowing the size distribution of the dispersed particles in the EPD suspension.

The size distributions of some commercially available powders used for the production of solid electrolyte capacitors are given in the Table 1. The examples are high CV niobium oxide powders of Hermann C. Starck (Germany) and Ningxia OTIC (China). Particle size distribution (PSD) of the powders was measured by dispersing powder in ethanol and measuring the sizes of the dispersed particles and agglomerates using a Malvern Zetasizer 2000 (United Kingdom). The parameters D10, D50 and D90 in the table are defined as follows: 10% by volume of the dispersion particles have particle size smaller than D10, 50% by volume of the dispersion particles have particle size smaller than D50, and 90% by volume of the dispersion particles have particle size smaller than D90. For example, a particle dispersion with D10 = 1.2 microns means that the total volume of the particles having size 1.2 microns and less is equal to 10% of the total volume of all of the particles.

**TABLE 1**

| **No** | **Batch / Manufacturer** | **Rated KCV** | **D10 (micron)** | **D50 (micron)** | **D90 (micron)** |
|---|---|---|---|---|---|
| 1. | 209-1-3 / 4 HCS | 80 | 1.2 | 2.7 | 5.7 |
| 2. | 209-1-5 HCS | 120 | 0.9 | 1.9 | 3.9 |
| 3. | 209-2-1 OTIC | 80 | 1.71 | 37.6 | 154 |

The rated CV of the powders listed in Table 1 is provided by the manufacturers based upon anodes that have been optimally pressed and sintered (recommended sintering temperature of pressed anodes for the above Ningxia OTIC 80KCV powder being 1300 to 1350°C). As can be seen in Table 1, typical capacitor grade powders are made from agglomerates of particles featuring wide particle size distribution. According to this invention, the capacitor grade powder used in this invention should comprise fine, non-agglomerated particles of the selected materials. In order to narrow the particle size distribution in a preferred embodiment of the invention agglomerates are eliminated from the powder after forming the EPD suspension by a process of sedimentation of large particles and agglomerates followed by decantation of the suspension. Other methods, for example a milling technique, are known in the art and could be used for preparing the required particle size distribution.

### Example 1: Production of NbO green anode

60000-80000µFV/g capacitor niobium oxide powder supplied by Ningxia OTIC is typically applied to high quality DIP type or CHIP niobium oxide electrolytic capacitors. It provides high specific capacitance and low leakage current. Some of the parameters supplied by OTIC for batch 209-2-1 80KCV NbO powder are:
- □: Powder surface area: BET = 1.48 m²/g
- □: Recommended sintering temperature (pressed anodes): 1300 to 1350°C
- □: Oxygen by weight: 15%
- □: chemical impurity (ppm)

| | | | | | |
|---|---|---|---|---|---|
| H | 60 | Cr | <30 | Si | <30 |
| C | 35 | K | 10 | P | 10 |
| N | 450 | Na | 1 | Cu | <30 |
| Fe | 40 | Mg | 160 | Ti | <30 |
| Ni | <30 | Al | <30 | Mn | <30 |

An EPD suspension for the deposition of niobium oxide green anodes was produced as described hereinbelow wherein the niobium oxide suspension for EPD was composed of the following materials:

| **Material** | **Catalog No.** | **Supplier** | **Batch No.** |
|---|---|---|---|
| Niobium Oxide powder (NbO) | NbO-0401 | Ningxia OTIC | 209-2-1 |
| 2-propanol (IPA) | 16260521 | BIO LAB | 40989 |
| Polyethylenimine (PEI 17%) | 181978 | Sigma Aldrich | NA |

The equipment used for preparation of the suspension and its characterization and measurements was as follows:

| **Apparatus** | **Description** | **Supplier** | **Model** |
|---|---|---|---|
| Sonicator | Used for particle dispersion by sonic energy | Fisher Scientific | 550 Sonic dismembrator |
| Mastersizer | Measurement of particle size distribution | Malvern | 2000 Superfine |
| Sedimentation/ decantation tool | Pyrex beaker with dimensions: height=6.5cm diameter= 11cm | - | - |

The preparation procedure of the EPD suspension was as follows:
- add 15 grams NbO powder to 300 ml IPA
- sonication for 5 minutes
- add 240 µl PEI 17%
- sonication for 1 minute
- Stir while cooling.

The pH of the above suspension was 8.37 and its conductivity was 0.7µS/cm at 25.2°C.

Particle size distribution was analyzed for the above dispersion. As said above, in the preferred embodiment of this invention, the particle size of the EPD suspension is made smaller and more uniform by sedimentation of agglomerates and decantation of the suspension prior to carrying out the electrophoretic deposition process of the green anode. The smaller and more uniform particle size used in the EPD process according to the invention allows the production of a green anode having fine morphology with uniform pore structure. This allows the production of robust anodes even when the green anode is sintered at significantly lower temperatures than in conventional production techniques based on pressed pellets.

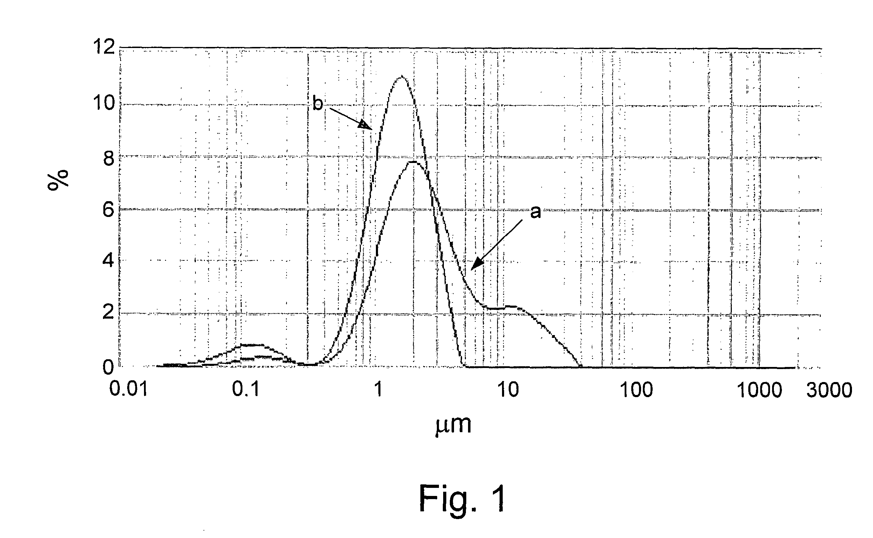

A one hour sedimentation process was then performed, removing particle agglomerates from the dispersion. The particle size distribution measurement was then repeated. The results are shown in Fig. 1 and summarized in table 2. Fig. 1 shows two particle size distributions (the graph shows the differential distribution of the particle size that is derived from the cumulative distribution given in table 2). Curve a is the distribution for the NbO powder in the EPD suspension prepared according to the above method and curve b is the distribution after a one hour sedimentation process followed by decantation.

**TABLE 2**

| **Dispersion** | **D10** | **D50** | **D90** | **Ratio D90:D10** |
|---|---|---|---|---|
| **NbO powder in ethanol** | 1.71 µm | 37.6 µm | 154 µm | 90.1 |
| **As-prepared EPD suspension (curve a)** | 0.954 µm | 2.44 µm | 12.6 µm | 13.2 |
| **After sedimentation process (curve b)** | 0.584 µm | 1.47 µm | 2.92 µm | 5.0 |

As can be seen, the sedimentation process successfully removed particle agglomerates, thereby narrowing the dispersion particle size distribution and reducing average particle size.

For the purpose of example only, a procedure for electrophoretic deposition of green niobium oxide anodes from the above suspension is as follows:
a. insert into a beaker a Platinum foil that serves as the anode;
b. insert tantalum wire as the cathode with the length of tantalum wire exposed to the EPD suspension about 0.8 mm; and
c. apply 100V for 50 seconds.

The mass of the anode deposited by this procedure is 0.7 mg.

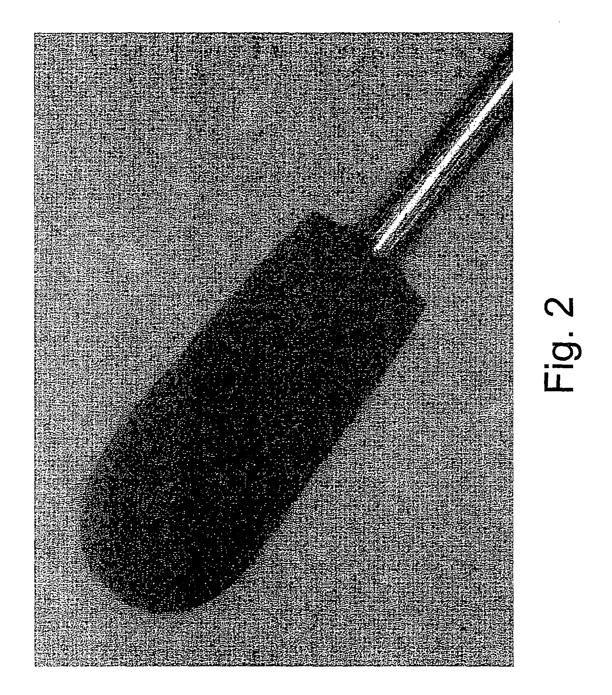

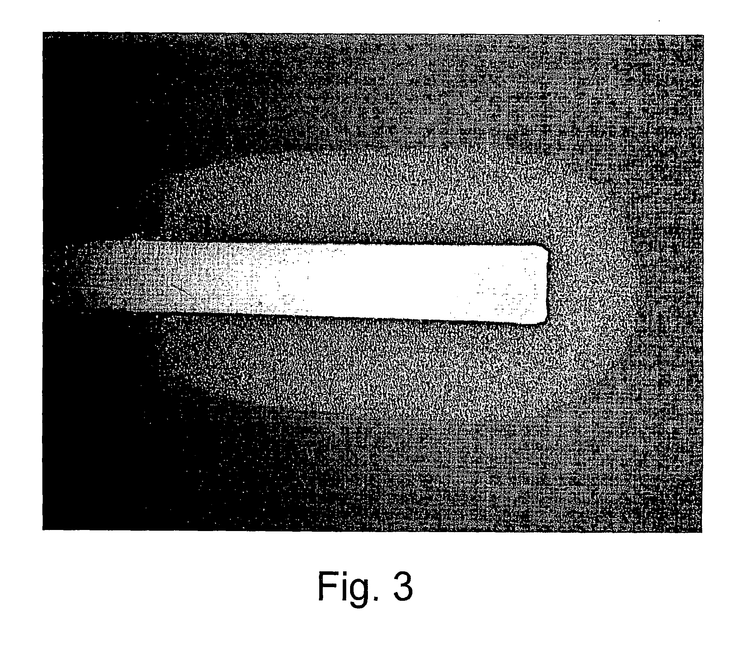

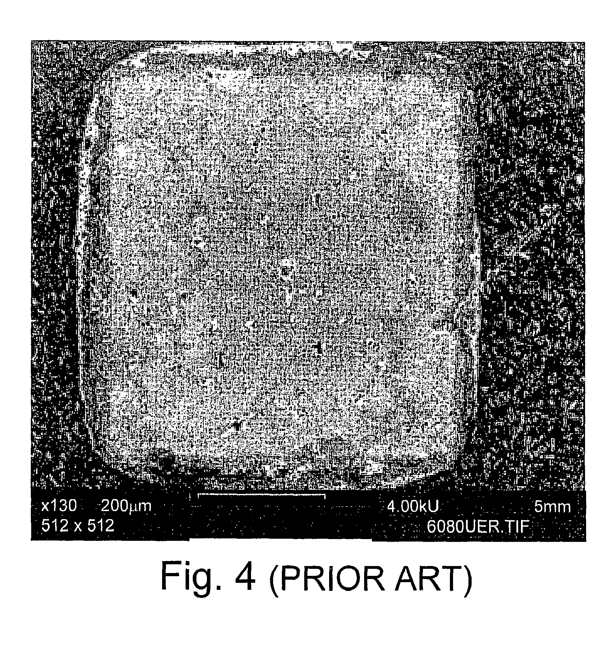

An example of niobium oxide green anode morphology achieved by this process is shown by the photomicrograph of Fig. 2 and a longitudinal cross section photomicrograph in Fig. 3. The anode length is 900 microns and the diameter is 500 microns. These may be compared with the coarser and more defective morphology of a typical tantalum anode produced by standard pressing technology as shown in the SEM cross section photo of Fig. 4 (TAJ capacitor of AVX Corporation, Myrtle Beach SC USA).

### Example 2: Production of NbO anode and calculation of CV

### Preparation of NbO green anode body by EPD

An EPD suspension was prepared by dispersing 5 g capacitor grade niobium oxide powder of 80,000 CV rating into 100 ml of 2-Propanol. The niobium oxide powder, designated 209-1-3, was supplied by Hermann C. Starck of Germany. The suspension was subjected to ultrasonic treatment in a Fisher Scientific Sonic Dismembrator 550 at 20 KHz and a power level of 550 Watts for 5 minutes in pulse regime, 2 sec pulse on and 2 sec pulse off. 150 µl of Polyethylenimine 17 wt% aqueous solution was added to the suspension and pulsed sonification repeated for 1 minute. The suspension was further stirred for 20 minutes. Large particles and agglomerates were allowed to sediment for one hour and the suspension was decanted. A suspension pH in the range of 9 to 10 and conductivity of 1 µS/cm were obtained.

A 0.2 mm diameter tantalum wire with a length of 2 cm acted as cathode in the EPD process. When an external voltage of 80 volts was applied between the cathode and a platinum counter-electrode in the presence of the suspension, positively charged NbO particles were deposited on the surface of the tantalum wire. The deposition time was 40 seconds. The green anode had a length of 1.5 mm and outer diameter of 550 micron. A total of 20 green anodes were produced.

### Sintering of the EPD green anode

Sintering was done in a vacuum furnace at a pressure of 5X10⁻⁵ millibar and a temperature of 1050 degrees Celsius. The sintering cycle included heating from room temperature to 150 degrees Celsius, at a rate of 50 degrees Celsius per minute and then continued heating at a rate of 100 degrees Celsius per minute to the final sintering temperature. The dwell time at the final sintering temperature was 20 minutes, after which the furnace was switched off and filled with helium gas (600 millibar) to speed the cooling rate. As the temperature in the furnace approached room temperature, the furnace was pumped again to 5X10⁻⁵ millibar and then filled with 50 millibar of air for an additional 20 minutes. The pressure was again raised to 100 millibar of air for an additional 20 minutes. Finally air was admitted to reach atmospheric pressure and the furnace opened.

### Dielectric formation and measurement thereof on a sintered anode

A dielectric layer, Nb₂O₅, was formed by anodization using a solution of 63% nitric acid in deionized water. The solution had a conductivity of 2 mS/cm. The anodic oxidation process was performed at constant electrical current of 0.1 mA per anode. Five anodes were anodized at each of four formation voltages: 7V, 14V, 21V and 30V. A standard 'wet-check' procedure was performed to validate and demonstrate the ability to achieve exceptionally high CV in these fine morphology anodes produced by EPD process and low sintering temperature, the subject matter of this invention. An electrolytic bath was filled with 10 molar ammonium nitrate water solution (300 mS/cm) with the sintered capacitor anode body as anode and a cylindrical platinum foil as cathode.

Table 3 shows results of electrical capacitance at each of the four formation voltages, where the table entries are total anode mass and total anode capacitance for the five anodes at each formation voltage. The average CV value calculated from these data demonstrates a 42.5% improvement over the niobium oxide powder rated CV.

**TABLE 3**

| Dielectric Formation Voltage | Total Anode Mass, mg | Total Anode Capacitance, µF | Powder CV (Cap*V/mass, µF-V/g) |
|---|---|---|---|
| 7V | 1.6 | 29.6 | 129,000 |
| 14V | 2.8 | 15.4 | 77,000 |
| 21V | 2.1 | 13.0 | 130,000 |
| 30V | 2.6 | 10.3 | 119,000 |
| **AVERAGE** | **--** | **--** | **114,000** |

### Example 3: Sintering and measurement of powder CV

To further demonstrate the results that can be obtained by using the method of the invention, green anodes deposited by EPD from various high CV niobium oxide powders were sintered over a range of temperatures, anodized (dielectric formation), and measured for capacitance. Powder CV was then calculated from the product of the dielectric formation voltage with the ratio of anode capacitance to anode weight for the anodes produced using the low temperature sintering process of the invention and compared to the rated CV of the powder. The basic sintering process used for all of the anodes used in this example is described as follows, where the peak sintering temperature is as presented in the table.

Sintering was done in a vacuum furnace at a pressure of 5X10⁻⁵ millibar and at peak temperatures as shown in the following table. The sintering cycle included heating from room temperature to 150 degrees Celsius at a rate of 50 degrees Celsius per minute and then continued heating at a rate of 100 degrees Celsius per minute to the final sintering temperature. The dwell time at the final sintering temperature was 20 minutes, after which the furnace was switched off and filled with helium gas (600 millibar) to speed the cooling rate. As the temperature in the furnace approached room temperature, the furnace was pumped again to 5X10⁻⁵ millibar and then filled with 50 millibar of air for an additional 20 minutes. The pressure was again raised to 100 millibar of air for an additional 20 minutes. Finally air was admitted to reach atmospheric pressure and the furnace opened. After anodization of the sintered anodes, anode capacitance was measured and powder CV was calculated. The results are presented in table 4 in which the third column shows the KCV of the powder as determined by the manufacturer based on the recommended prior art manufacturing process and the following columns list the KCV determined from the anodes produced according to the method of the invention.

**TABLE 4**

| POWDER | | | POWDER KCV, CALCULATED | | | | | |
|---|---|---|---|---|---|---|---|---|
| | | | SINTERING TEMPERATURE, °C | | | | | |
| manufacturer | batch | rated KCV | 950 | 1000 | 1050 | 1100 | 1150 | 1200 |
| H. C. Starck, Germany | 209-1-3/4 | 80 | 105 | 148 | 100 | 55 | 57 | 61 |
| H. C. Starck, Germany | 209-1-5 | 120 | 166 | 184 | 118 | 78 | 64 | 53 |
| Ningxia OTIC, China | 209-2-1 | 80 | 165 | -- | 139 | 58 | 66 | 55 |

By starting with an EPD process to make green anodes of fine morphology with uniform small pore structure, an optimal sintering temperature was then discovered for each powder that is hundreds of degrees lower than the generally accepted sintering temperature. Optimal sintering temperatures (maximum KCV) achieved for these examples are: 1000°C (148 KCV) for the H. C. Starck 80 KCV rated powder; 1000°C (184 KCV) for the H. C. Starck 120 KCV rated powder; and 950°C (165 KCV) for the Ningxia OTIC 80 KCV rated powder, where this innovation achieved. For the Ningxia OTIC powder, the capacitance achieved from the powder is more than double its rating, where this was achieved by using a sintering temperature for the EPD deposited green anode that is about 375°C lower than the manufacturer's recommended optimum sintering temperature.

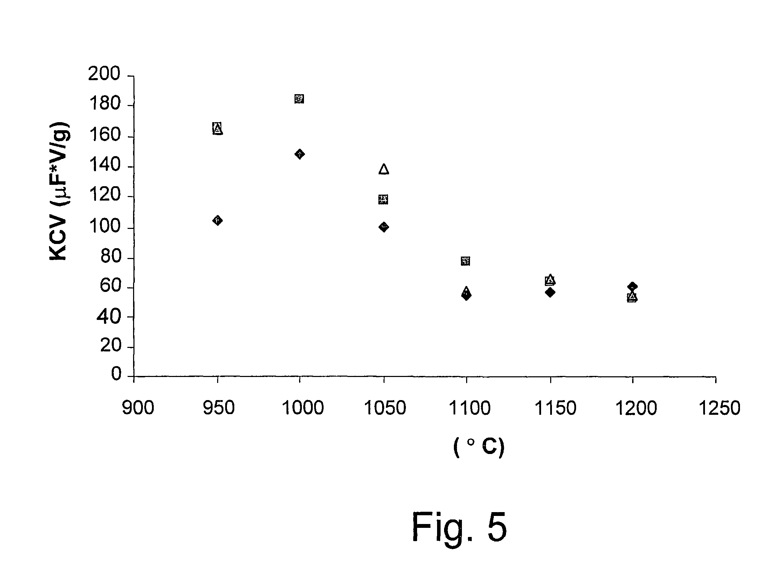

It can be seen from the results shown in table 4 (and also from Fig. 5) that when sintering at temperatures above 1050C the CV decreases significantly below the manufacture's rated value, i.e. the anode is over-sintered. This illustrates the motivation of the present invention. For standard anodes built from agglomerated powder high temperature is required in order to get the large agglomerates to stick together to form a robust anode; however, such a temperature causes oversintering of the small particles within the agglomerate, causing a loss of surface area and therefore CV.

The same anodization process was used to produce the above anodes, with various peak formation voltages used for each anode set The anodization process is summarized as follows:
a. add 500µl of 63% nitric acid to 100 ml deionized water, obtaining solution conductivity of about 2000 µS/cm and pH 3.0-3.5 at 21°C;
b. insert platinum foil in the beaker as a cathode;
c. insert the green NbO pellet as an anode;
d. apply constant current of 0.1 mA and allow the voltage to rise linearly until a preset voltage limit is reached (voltage limits used herein for evaluating the powder CV achieved by the low sintering temperatures of this invention are 7V, 14V, 21 V, and 30V); and
e. allow the current to decrease after the voltage limit is reached until the process is ended when no apparent change in the current is evident (dI/dt ≤ 0.02 µA/min).

As an example of the order of magnitude of the time involved for the anodization process, for a voltage limit of 21V it takes about 10 minutes for the voltage to rise to the limit and the overall process takes about 80-90 minutes.

A high conductivity electrolyte of 10 molar ammonium nitrate water solution (300 mS/cm) was used for measuring capacitance and leakage current of the anodized, sintered anodes.

The KCV results listed in table 4 are also presented in graphical form in Fig. 5. Several anodes were measured for each data point on this graph and the points shown on the graph are the average for each powder and sintering temperature. On the graph the data for the H. C. Starck 80KCV powder is represented by the diamonds, H. C. Starck 120KCV by squares, and Ningxia 80KCV by triangles.

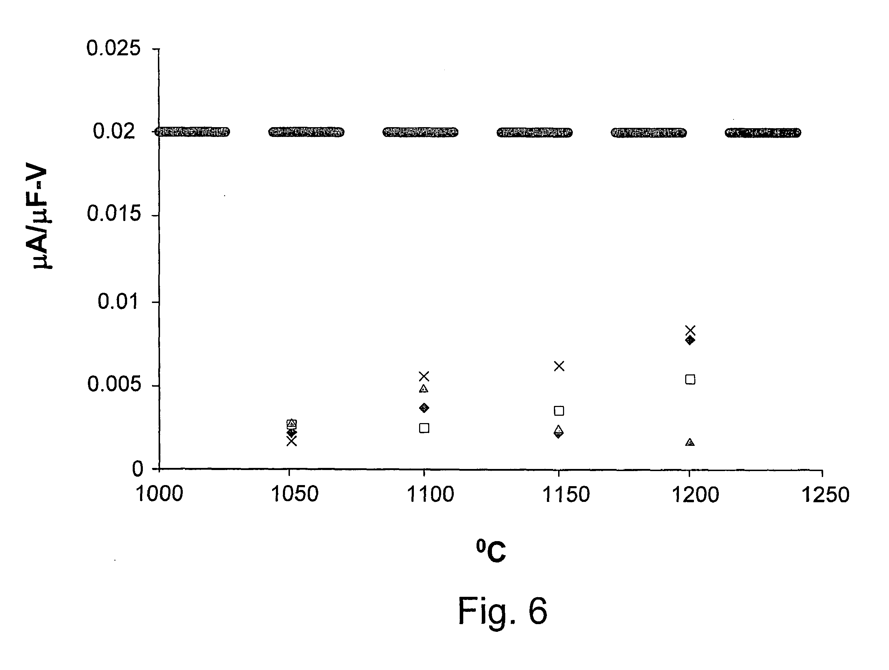

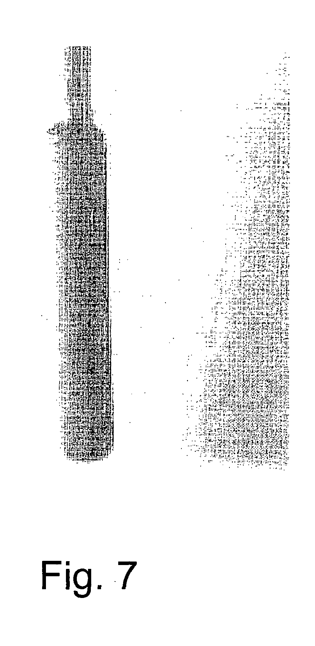

The fine morphology of the EPD deposited anodes also provided for low leakage current of anodes that were sintered at the low sintering temperatures of this invention. This is shown in Fig. 6 where, for example, anode leakage current at 1050°C sintering temperature is generally lower than achieved at 1200°C and where the scatter of the leakage current data between anodes is dramatically reduced. In Fig. 7 the leakage current DCL is plotted on the vertical axis and the sintering temperature on the horizontal axis. The dashed horizontal line at DCL= 0.02µA/µF-V represents the maximum value of DCL listed in the AVX catalog (AVX is the only manufacturer today with significant commercial production of niobium oxide capacitors) for CV's above 50 µF-V. In Fig 6, two batches of Hermann C. Starck 80 KCV material are represented by the diamonds and squares, Starck 120 KCV material is represented by the triangles, and Ningxia OTIC 80 KCV material is represented by the x's.

The capacitor grade powder used in the present invention can be made from any anodic dielectric oxide film-forming electrical conductive material. According to preferred embodiments of the present invention, the powder is made from, but is not limited to, particles of one of the following materials: tantalum, aluminum, magnesium, titanium, niobium, zinc, zirconium or niobium monoxide.

According to the present invention, suitable powder particle size is characterized by D₁₀ ranging from 0.2 micron to 2 microns, D₅₀ ranging from 0.5 micron to 5 microns and D₉₀ ranging from 1.2 microns to 12 microns. According to preferred embodiments of the present invention, the powder particle size is characterized by D₁₀ ranging from 0.4 micron to 0.8 micron, D₅₀ ranging from 0.8 micron to 3 microns and D₉₀ ranging from 1.5 microns to 6 microns.

### Example 5: Production of capacitors

Very high capacitance solid electrolytic capacitors can be made from the high CV anodes produced by the invention. After formation of dielectric within the sintered anode, the anodized porous body is subsequently impregnated and coated with a cathode material, coated with carbon and silver paste and then connected to a cathode lead wire, lead frame or other manner of electrical contact. The final assembly is encapsulated in epoxy or other resin. The cathode material may be composed, for example, of manganese dioxide or conducting polymer. By way of example only, anode capacitance that is twice the rated CV of the capacitor powder, has been achieved by the invention, thereby providing a capacitor having double the capacitance of a prior art capacitor for given dimensions of the solid electrolytic capacitor.

In Fig. 7 is shown an unencapsulated capacitor made from an anode produced by EPD from Hermann C. Starck 80KCV NbO powder, sintered at 1050°C, and with dielectric coating formed at 7V, according to the procedure of example 2. The sintered anode was then impregnated with a manganese dioxide cathode and coated with carbon and silver layers in order to complete the (unencapsulated) capacitor. Measured parameters of the capacitor shown in Fig. 5 are listed in table 5.

**TABLE 5**

| **Parameter** | **Value** |
|---|---|
| Capacitance | 4.35 µF |
| Leakage Current | 0.018 µA |
| DF | 2.57% |
| ESR | 2.54 Ω |

While some embodiments of the invention have been described by way of illustration, it will be apparent that the invention can be applied in practice with many modifications, variations and adaptations, and with the use of numerous equivalent or alternative solutions that are within the capacity of persons skilled in the art, without the exceeding the scope of the invention.

## Claims

1. A high capacitance capacitor anode manufactured by creating a green anode body from particles of a dielectric oxide film-forming electrical conducting non-agglomerated powder, sintering said green anode body, and anodizing said sintered body; wherein, said non-agglomerated powder comprises fine particles having a small average particle size and a narrow size distribution; and said green anode body is sintered at temperatures lower than 1200°C.

2. A high capacitance capacitor anode according to claim 1, wherein said anode has a morphology comprised of a multitude of solid particles of powder substantially uniformly dispersed throughout the volume occupied by the anode body and voids interspersed between said particles forming a network of interconnecting channels.

3. A high capacitance capacitor anode according to claim 1, wherein the powder is treated before being formed into a green anode body such that the fine particles have a small maximum particle size and a narrow size distribution.

4. A high capacitance capacitor anode according to claim 2, wherein the morphology allows the green anode body to be sintered at a temperature significantly lower than that recommended by the manufacturer of the powder.

5. A high capacitance capacitor anode according to claim 5, wherein, after anodizing, the measured CV of said anodized, sintered anode is significantly higher than the CV determined for said powder by said manufacturer.

6. A high capacitance capacitor anode according to claim 1, wherein the green anode body is formed by depositing the fine particles from a suspension by an EPD process.

7. A high capacitance capacitor anode according to claim 1, wherein the green anode body is sintered at a temperature in the range from 900□C to 1000□C.

8. A high capacitance capacitor anode according to claim 1, wherein the powder is made from particles of one of the materials selected from the following group: tantalum, aluminum, magnesium, titanium, niobium, zinc, zirconium, and niobium monoxide.

9. A high capacitance capacitor anode according to claim 1, wherein the non-agglomerated powder particle size is **characterized by** D₁₀ in the range from 0.2 micron to 2 microns, D₅₀ in the range from 0.5 micron to 5 microns and D₉₀ in the range from 1.2 microns to 12 microns.

10. A high capacitance capacitor anode according to claim 1, wherein the non-agglomerated powder particle size is **characterized by** D₁₀ in the range from 0.4 micron to 0.8 micron, D₅₀ in the range from 0.8 micron to 3 microns and D₉₀ in the range from 1.5 microns to 6 microns.

11. A method of producing the high capacitance capacitor anode of claim 1, said method comprising the steps of:
a. selecting a capacitor grade powder;
b. treating the powder to produce non-agglomerated powder comprising fine particles having a small maximum particle size and a narrow size distribution;
c. preparing a green anode;
d. sintering the green anode; and
e. oxidizing the entire inner and outer surface of the sintered anode.

12. A method according to claim 11, wherein, in step c, the green anode body is formed by depositing fine particles from a suspension by an EPD process, said method comprising the additional step, between step a and step b, of preparing a stable suspension of the capacitor grade powder that is suitable for said EPD deposition process; and wherein step b is carried out by treating said stable suspension by sedimentation and decantation, thereby reducing agglomerate size and narrowing the size distribution of the dispersed particles in said EPD suspension.

13. A method according to claim 11, wherein, in step b, a milling technique is used to achieve the required particle size distribution.

14. A method according to claim 11, wherein, in step d, the sintering temperature is between 9000□C and 1000□C.

15. A method according to claim 11, wherein the powder is made from particles of one of the materials selected from the following group: tantalum, aluminum, magnesium, titanium, niobium, zinc, zirconium, and niobium monoxide.

16. A method according to claim 11, wherein the non-agglomerated powder particle size is **characterized by** D₁₀ ranging from 0.2 micron to 2 microns, D₅₀ ranging from 0.5 micron to 5 microns and D₉₀ ranging from 1.2 microns to 12 microns.

17. A method according to claim 11, wherein the non-agglomerated powder particle size is **characterized by** D₁₀ ranging from 0.4 micron to 0.8 micron, D₅₀ ranging from 0.8 micron to 3 microns and D₉₀ ranging from 1.5 microns to 6 microns.

18. A solid electrolyte capacitor comprising a high capacitance capacitor anode according to claim 1.

19. A solid electrolyte capacitor comprising a high capacitance capacitor anode produced according to the method of claim 11.
